# EUROPEAN PATENT APPLICATION

(11) **EP 4 730 832 A1**
(43) Date of publication of application: **22.04.2026**
(21) Application number: 25206704.6
(22) Date of filing: 03.10.2025
(51) Int. Cl.: H04N 23/695

(54) **IMAGING APPARATUS, CONTROL METHOD FOR AN IMAGING MEANS, RECORDING MEDIUM AND PROGRAM**

(30) Priority: 16.10.2024 JP 2024181277; 07.07.2025 JP 2025114617
(71) Applicant: Canon Kabushiki Kaisha, Tokyo, 146-8501 (JP)
(72) Inventor: KANEKO, Seigo, Tokyo, 146-8501 (JP); FUJITA, Kensuke, Tokyo, 146-8501 (JP); SANDO, Ryota, Tokyo, 146-8501 (JP)
(74) Representative: Canon Europe Limited

(57) **Abstract**

An imaging apparatus includes an imaging means, a drive means configured to rotate the imaging means, and a control means configured to control a first current value to be applied to the drive means in a case where a rotation speed is less than or equal to a threshold, and control a second current value smaller than the first current value to be applied to the drive means in a case where the rotation speed is greater than the threshold, wherein the threshold is a rotation speed preliminarily set based on the presence or absence of speed unevenness.

## Description

### Technical Field

The present disclosure relates to an imaging apparatus, a control method for an imaging means, a recording medium, and a program.

### BACKGROUND

It is desirable to improve the operation of an imaging apparatus configured to be rotatable in pan and tilt directions.

Japanese Patent Laid-Open No. 2001-346398 describes a configuration of a stepping motor control apparatus of an optical apparatus for use in rotatable imaging apparatus. The stepping motor control apparatus controls a current to be supplied to a stepping motor based on a rotational state (e.g., constant speed, acceleration, deceleration, and stop states) of the stepping motor. This configuration prevents the occurrence of operating noise due to excessive torque or the like.

### SUMMARY

In Japanese Patent Laid-Open No. 2001-346398, reduction of driving noise is attempted by reducing torque, but improvements aimed at reducing speed unevenness are not considered.

The present disclosure in its first aspect provides an imaging apparatus comprising: an imaging means; a drive means for rotating the imaging means; and a control means for controlling a first current value to be applied to the drive means in a case where a rotation speed is less than or equal to a threshold, and controlling a second current value smaller than the first current value to be applied to the drive means in a case where the rotation speed is greater than the threshold, wherein the threshold is a rotation speed preliminarily set based on the presence or absence of speed unevenness.

The present disclosure in its second aspect provides an imaging apparatus comprising: an imaging means; a drive means for rotating the imaging means; and a control means for controlling a current value to be applied to the drive means based on a preliminarily set of characteristics that represent a relationship between a rotation speed and a current value to be applied to the drive means, wherein the characteristics represent a relationship in which a current value to be applied to the drive means in a low-speed range of the rotation speed is greater than a current value to be applied to the drive means in a high-speed range of the rotation speed.

The present disclosure in its third aspect provides an imaging apparatus comprising: an imaging means; a drive means for changing an imaging direction of the imaging means; a current value switching means for changing a current value to be applied to the drive means based on a first speed, which is a speed for changing the imaging direction of the imaging means; and a control switching means for changing a control operation other than an operation of changing the current value based on a second speed, which is a speed for changing the imaging direction of the imaging means and is different from the first speed

The present disclosure in its fourth aspect provides a control method an imaging means comprising: driving the imaging means by a drive means; and controlling a first current value to be applied to the drive means in a case where a rotation speed is less than or equal to a threshold, and controlling a second current value smaller than the first current value to be applied to the drive means in a case where the rotation speed is greater than the threshold, wherein the threshold is a rotation speed preliminarily set based on the presence or absence of speed unevenness.

The present disclosure in its fifth aspect provides a control method for an imaging means comprising: driving the imaging means by a drive means; and controlling a current value to be applied to the drive means based on preliminarily set characteristics that represent a relationship between a rotation speed and a current value to be applied to the drive means, wherein the characteristics represent a relationship in which a current value to be applied to the drive means in a low-speed range of the rotation speed is greater than a current value to be applied to the drive means in a high-speed range of the rotation speed.

The present disclosure in its sixth aspect provides a control method for an imaging means comprising: driving the imaging means by a drive means; changing a current value to be applied to the drive means based on a first speed, which is a speed for changing an imaging direction of the imaging means; and changing a control operation other than an operation of changing the current value based on a second speed, which is a speed for changing the imaging direction of the imaging means and is different from the first speed.

The present disclosure in its seventh aspect provides a recording medium for storing a program for causing a computer to execute a control method according to the fourth aspect.

The present disclosure in its eighth aspect provides a program for causing a computer to execute a control method according to the fifth aspect.

Optional features will now be set out. These are applicable singly or in any combination with any aspect of the disclosure. Optionally, the imaging apparatus may comprise a zoom driving means for changing an imaging angle of view of the imaging means. The control means may be configured to change the threshold based on the imaging angle of view.

According to aspects of the present disclosure, the term 'preliminarily' may define a process of configuring an initial value (e.g., a value which may be amended or reconfigured subsequently to produce a final value).

The control means may be configured to gradually reduce a current value to be applied to the drive means, from the first current value to the second current value, if the rotation speed is above the threshold and up to a predetermined rotation speed greater than the threshold (e.g., if the rotation speed is identified to be within a range of values which exceeds the threshold but less than, or equal to, the predetermined rotation speed).

Optionally, the imaging apparatus may comprise a pan driving means for moving an orientation of the imaging means in a pan direction, the pan driving means functioning as the drive means.

Optionally, the imaging apparatus may comprise a tilt driving means for moving the orientation of the imaging means in a tilt direction, the tilt driving means functioning as the drive means.

The threshold may be set to at least one, or each, of the pan driving means and the tilt driving means.

The control means may be configured to control the pan driving means and the tilt driving means separately.

The drive means may include a stepping motor.

Characteristics that represent a relationship between a rotation speed and a current value to be applied to the drive means may represent a relationship among at least two of a rotation speed, an imaging angle of view, and a current value to be applied to the drive means.

The control switching means may be configured to switch between a constant voltage control operation and a constant current control operation.

The control switching means may be configured to switch between a step control operation and a vector control operation.

The control switching means may be configured to switch a division number of a step control operation.

A switching prohibition time may be set after at least one of switching (e.g., a switching operation) by the current value switching means and switching by the control switching means.

A priority may be set to each of the current value switching means and the control switching means.

Optionally, one or more switching operations may be performed in descending order of priority in a case where the first speed and the second speed are exceeded simultaneously.

The imaging apparatus according may further comprise: a first device configured to switch the current value; and a second device configured to switch the control operation. A priority may be set to each of the first device and the second device. In a case where the device with higher priority has not performed a switching operation, the device with lower priority may be configured to perform a switching determination operation.

According to tenth, eleventh and twelfth aspects of the present disclosure there is provided a program comprising instructions which, when the program is executed by a computer, causes the computer to carry out the control method according to the fourth to sixth aspects, respectively.

It will be understood that features implemented in hardware may be implemented in software, and vice versa. Any reference to software and hardware features herein should be construed accordingly. For example, in accordance with aspects of the disclosure, there are provided a computer program comprising instructions which, when the program is executed by one or more processing units, cause the one or more processing units to carry out any one of the method steps of the method of any aspect or example described above.

The preceding summary is provided for the purpose of summarizing examples of the subject matter described herein. Accordingly, the above-described features should not be construed to narrow the scope or spirit of the subject matter described herein in any way. Moreover, the above and/or proceeding examples may be combined in any suitable combination to provide further examples, except where such a combination is clearly impermissible or expressly avoided. Other features of the present disclosure will become apparent from the following description of embodiments with reference to the attached drawings.

### BRIEF DESCRIPTION OF THE DRAWINGS

Fig. 1 is a perspective view illustrating an imaging apparatus according to a first embodiment.
Fig. 2 is a block diagram illustrating an example of a configuration of the imaging apparatus according to the first embodiment.
Fig. 3 is a graph illustrating an example of a relationship between a rotation speed and a driving current value.
Fig. 4 is a graph illustrating an example of a relationship between a rotation speed and a driving current value.
Fig. 5 is a flowchart illustrating an example of control processing to be performed by the imaging apparatus according to the first embodiment.
Fig. 6 is a flowchart illustrating an example of control processing to be performed by an imaging apparatus according to a second embodiment.
Fig. 7 is an example of a table illustrating a relationship between an imaging angle of view and a threshold.
Fig. 8 is a flowchart illustrating an example of control processing to be performed by an imaging apparatus according to a third embodiment.
Fig. 9A is an example of a table illustrating a relationship among a rotation speed, an imaging angle of view, and a driving current value.
Fig. 9B is an example of a table illustrating a relationship between a rotation speed and a driving current value.
Fig. 10 is a graph illustrating an example of a relationship between a rotation speed and a driving current value.
Fig. 11 is a graph illustrating an example of a speed control operation for a drive unit.
Fig. 12 is a graph illustrating a state of each of a control switching operation and a driving current value switching operation.
Fig. 13 is a flowchart illustrating an example of control processing to be performed by an imaging apparatus according to a fourth embodiment.
Fig. 14 illustrates current waveforms of a two-phase stepping motor.
Fig. 15 illustrates current waveforms when the driving current value is switched.
Fig. 16 illustrates a current waveform for constant voltage control and a current waveform for constant current control.
Fig. 17 illustrates a state of jerk during the control switching operation.
Fig. 18 illustrates a state of jerk during the driving current value switching operation.
Fig. 19 is a graph illustrating a state of each of a control switching operation and a driving current value switching operation.
Fig. 20 is a graph illustrating a state of each of a control switching operation and a driving current value switching operation.
Fig. 21 illustrates current waveforms when micro-step driving and full-step driving are switched at 315 degrees.
Fig. 22 illustrates current waveforms when micro-step driving and full-step driving are switched at 90 degrees.
Fig. 23 is a graph illustrating a state of each of a control switching operation and a driving current value switching operation.
Fig. 24 is a block diagram illustrating an example of a configuration for implementing the control switching operation and the driving current value switching operation.
Fig. 25 is a block diagram illustrating an example of a configuration for implementing a vector control operation with a position sensor.
Fig. 26 is a block diagram illustrating an example of a configuration for implementing the vector control operation without the position sensor.
Fig. 27 is a block diagram illustrating an example of a configuration for implementing the control switching operation and the driving current value switching operation.
Fig. 28 is a block diagram illustrating an example of a hardware configuration of a control unit (central processing unit (CPU)).

### DESCRIPTION OF THE EMBODIMENTS

Embodiments of the present disclosure will be described below with reference to the attached drawings. The following description of embodiments is provided by way of example. Further embodiments will be apparent to those skilled in the art.

### (First Embodiment)

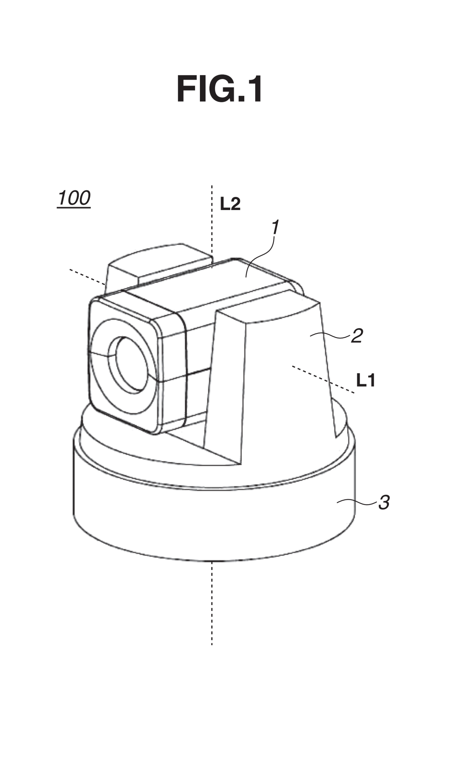

A first embodiment will be described with reference to Figs. 1 to 5.

Fig. 1 is a perspective view illustrating an imaging apparatus 100 according to the first embodiment.

The imaging apparatus 100 includes a camera unit 1, a support unit 2, and a base unit 3. The camera unit 1 includes a lens (not illustrated) and an imaging unit 11 to be described below. The lens has a zooming function. The camera unit 1 corresponds to an imaging unit (or imaging means) according to the present disclosure. The support unit 2 supports the camera unit 1 and causes the camera unit 1 to rotate in a tilt direction about a tilt axis L1. The base unit 3 supports the support unit 2 and causes the camera unit 1 and the support unit 2 to rotate in a pan direction about a pan axis L2. With this configuration, the imaging direction of the camera unit 1 can be changed. A rotation operation in the tilt direction is also referred to as a tilting operation, and a rotation operation in the pan direction is also referred to as a panning operation. The imaging apparatus 100 having the configuration as described above can be applied to, for example, a remote camera to be used in a live music club, a photo studio, and the like, a monitoring camera, and a camera configured to perform a panning operation and a tilting operation, such as an interchangeable lens pan/tilt camera.

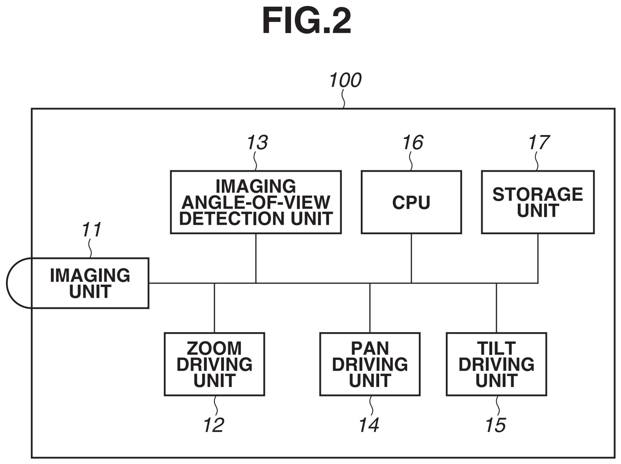

Fig. 2 is a block diagram illustrating an example of a configuration of the imaging apparatus 100 according to the first embodiment.

The imaging apparatus 100 includes the imaging unit 11, a zoom driving unit 12, an imaging angle-of-view detection unit 13, a pan driving unit 14, a tilt driving unit 15, a central processing unit (CPU) 16, and a storage unit 17.

The imaging unit 11 includes an image sensor, such as a charge-coupled device (CCD) sensor or a complementary metal-oxide semiconductor (CMOS) sensor, and an analog-to-digital (A/D) converter. An optical image is formed on the image sensor through the lens (not illustrated) within the camera unit 1. The image sensor outputs an electric signal (analog signal) based on the optical image and the A/D converter converts the analog signal into a digital signal to be output as image data. The configuration of each of the image sensor and the A/D converter that are included the imaging unit 11 is not particularly limited, and various known configurations can be applied. In other words, the imaging unit 11 may be configured to generate an electric signal (image data) based on an optical image of an object and output the generated electric signal.

The zoom driving unit 12 includes a mechanical driving system for performing a zooming operation, a motor as a driving source, and a motor driver, and is controlled by the CPU 16. The zoom driving unit 12 moves the lens (not illustrated) within the camera unit 1 to change the imaging angle of view.

The imaging angle-of-view detection unit 13 detects the imaging angle of view based on lens movement information from the zoom driving unit 12.

The pan driving unit 14 includes a mechanical driving system for performing a panning operation, a motor as a driving source, and a motor driver, and is controlled by the CPU 16. The CPU 16 sets a rotation speed, a driving current value, and the like for the pan driving unit 14, and the pan driving unit 14 causes the camera unit 1 and the support unit 2 to rotate in the pan direction. The motor of the pan driving unit 14 is, for example, a stepping motor configured to control the rotational velocity of the motor with a pulse signal.

The tilt driving unit 15 includes a mechanical driving system for performing a tilting operation, a motor as a driving source, and a motor driver, and is controlled by the CPU 16. The CPU 16 sets a rotation speed, a driving current value, and the like for the tilt driving unit 15, and the tilt driving unit 15 causes the camera unit 1 to rotate in the tilt direction. The motor of the tilt driving unit 15 is, for example, a stepping motor configured to control the rotational velocity of the motor with a pulse signal.

The CPU 16 controls an overall operation of the imaging apparatus 100. The CPU 16 executes programs stored in the storage unit 17, thereby functioning as a control unit according to the present disclosure to perform processing to be described below.

The storage unit 17 is an electrically recordable and erasable memory, a system memory, a working memory, or an image memory. Examples of the storage unit 17 include a random access memory (RAM) and a read-only memory (ROM). The storage unit 17 stores constants and programs for operation of the CPU 16. The programs stored in the storage unit 17 include programs for executing flowcharts to be described below. In the present embodiment, the storage unit 17 stores a threshold X for the rotation speed to be described below. The storage unit 17 also stores information detected by the imaging angle-of-view detection unit 13.

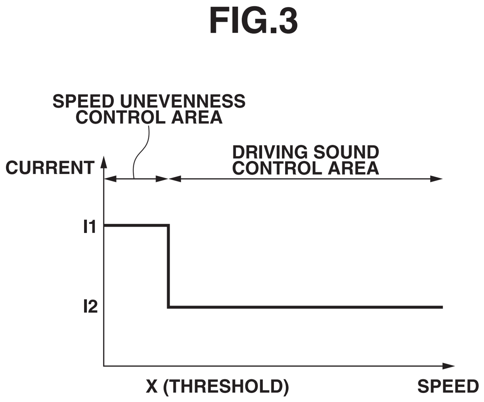

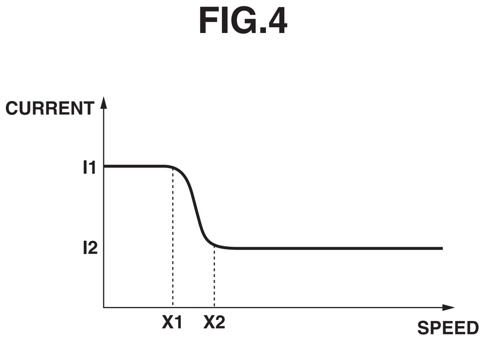

Next, a control operation of changing a current value to be applied to a drive unit for rotation (this current value is hereinafter referred to as a driving current value) based on an instructed rotation speed will be described with reference to Figs. 3 and 4. The drive unit described herein corresponds to the pan driving unit 14 and the tilt driving unit 15 described above. In the following description, these driving units are simply referred to as the drive unit without distinguishing the pan driving unit 14 and the tilt driving unit 15 from each other.

Fig. 3 is a graph illustrating a relationship between a rotation speed (horizontal axis) and a driving current value (vertical axis). As illustrated in Fig. 3, the CPU 16 in the imaging apparatus 100 performs a control operation of changing the driving current value based on an instructed rotation speed. Two control areas (e.g., regions, or ranges, of the control operation) are set for the rotation speed. A speed unevenness control area on the low-speed side of the rotation speed and a driving sound control area on the high-speed side of the rotation speed are set. The control areas will be described below.

### <Speed Unevenness Control Area>

The term " speed unevenness" refers to periodic minute changes in speed when the imaging apparatus 100 is caused to perform the panning operation or the tilting operation. Particularly, when the imaging apparatus 100 is caused to perform the panning operation or the tilting operation at a low speed, the influence of speed unevenness is significant and becomes noticeable within the imaging angle of view (e.g., the speed unevenness can be visually recognized).

To reduce the speed unevenness, the driving current value can be increased, i.e., torque can be increased, to improve the holding force of each motor as a driving source. However, driving sound also increases as the torque increases. However, noise caused by the motor is relatively small on the low-speed side of the rotation speed.

Thus, on the low-speed side of the rotation speed, noise caused by the motor is small and speed unevenness is noticeable, so that priority is given to reducing speed unevenness. On the other hand, on the high-speed side of the rotation speed, noise caused by the motor is large and speed unevenness is not noticeable, so that priority is given to reducing driving sound.

Specifically, the imaging apparatus 100 sets control areas divided so as to reduce speed unevenness and reduce driving sound, and sets a driving current value I1 for the speed unevenness control area to be greater than a driving current value I2 for the driving sound control area (I2 < I1).

### <Driving Sound Control Area>

The driving sound control area is a control area in which priority is given to reducing driving sound as described above. To reduce driving sound, the driving current value (e.g., which may be indicative of the torque applied by the motor) is desired to be reduced, so that the driving current value I2 for the driving sound control area is set to be smaller than the driving current value I1 for the uneven speed control area (I2 < I1).

### <Threshold X>

In the present embodiment, the threshold X is set at a boundary between the speed unevenness control area and the driving sound control area. The threshold X is a rotation speed at which the driving current value is changed. Specifically, if the rotation speed instructed by the user is less than or equal to the threshold X, the CPU 16 applies the driving current value I1 to the drive unit to drive the drive unit. If the rotation speed instructed by the user is greater than the threshold X, the CPU 16 applies the driving current value I2 to the drive unit to drive the drive unit.

The threshold X is preliminarily set in accordance with the presence or absence of speed unevenness. The presence or absence of speed unevenness can be determined based on a variation in the rotation speed with respect to a certain target speed. It is experimentally confirmed that speed unevenness can be visually recognized, when the variation in the rotation speed with respect to the target speed is, for example, more than or equal to 0.2. Accordingly, determination of presence of the speed unevenness (speed unevenness is noticeable) is made when the variation is more than or equal to 0.2, and determination of absence of the speed unevenness (speed unevenness is not noticeable) is made when the variation is less than 0.2. In other words, the threshold X is set to a rotation speed at which the variation in the rotation speed with respect to the target speed is less than 0.2.

The noticeability of speed unevenness varies depending on whether the imaging angle of view is telephoto or wide angle. In the case of telephoto, since the imaging angle of view is narrower than that of the wide angle and the amount of speed change per pixel becomes larger, speed unevenness is more noticeable even when the change in speed is small. Therefore, when the imaging angle of view is minimum (for example, at the telephoto end), the minimum rotation speed at which speed unevenness is not noticeable corresponds to the maximum value of the threshold X. According to the present embodiment, in order to reduce speed unevenness at all imaging angles of view, the threshold X is, for example, set to the minimum rotation speed at which speed unevenness is not noticeable at the telephoto end.

Further, since the threshold X in a horizontal angle of view is different from the threshold X in a vertical angle of view, the threshold X can be set to the panning operation and the tilting operation separately. The threshold X is set to each of the pan driving unit 14 and the tilt driving unit 15, and the CPU 16 controls the pan driving unit 14 and the tilt driving unit 15 separately.

Fig. 4 is a graph illustrating another example of the relationship between the rotation speed (horizontal axis) and the driving current value (vertical axis). While Fig. 3 illustrates an example of the graph in which the driving current value is switched immediately (in a stepwise manner) at the threshold X, the switching method is not limited to that in this example. As illustrated in Fig. 4, in the range in which the instructed rotation speed exceeds a threshold X1 and reaches a predetermined rotation speed X2 that is greater than the threshold X1, the driving current value may be gradually reduced from the driving current value I1 to the driving current value I2. The threshold X1 may be set to a value equal to the threshold X illustrated in Fig. 3. Alternatively, the threshold X illustrated in Fig. 3 may be located at an intermediate position between the threshold X1 and the predetermined rotation speed X2. That is, the method for changing the driving current value is not limited to the examples illustrated in Figs. 3 and 4, as long as the driving current value is set to the driving current value I1 when speed unevenness is noticeable, and the driving current value is set to the driving current value I2 when speed unevenness is not noticeable.

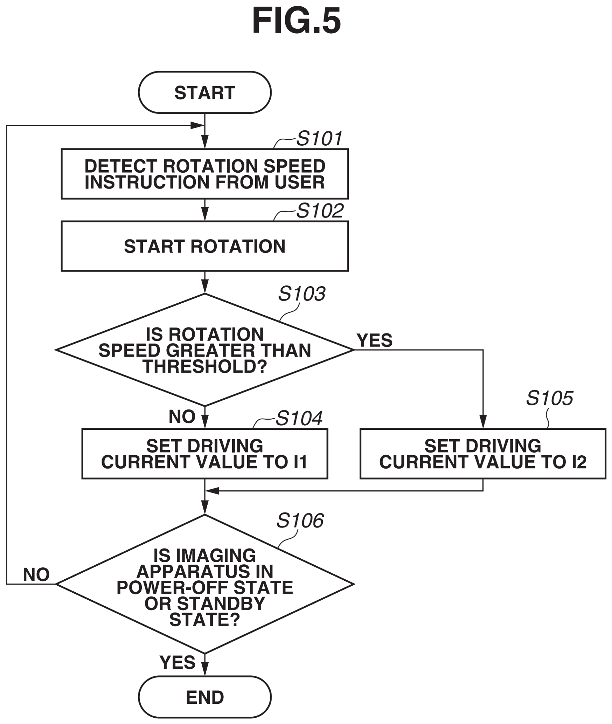

Next, a control operation of changing the driving current value based on the instructed rotation speed will be described with reference to Fig. 5. Fig. 5 is a flowchart illustrating an example of control processing to be performed by the imaging apparatus 100 according to the first embodiment. The processing of the flowchart illustrated in Fig. 5 is implemented such that the CPU 16 executes programs stored in the storage unit 17. The processing in this flowchart is started when the user makes the imaging apparatus 100 ready for the panning operation and the tilting operation. The processing in this flowchart may be executed separately for the panning operation and for the tilting operation. Fig. 5 illustrates an example where the driving current value is controlled based on the relationship between the rotation speed and the driving current value as illustrated in Fig. 3.

In step S101, the CPU 16 detects a rotation speed instruction from the user. Examples of the method in which the user issues the rotation speed instruction include an operation to be performed using a controller, and a preset instruction. The preset instruction is a known technique, and thus the detailed description thereof is omitted.

In step S102, the CPU 16 controls the drive unit to start rotation.

In step S103, the CPU 16 determines whether the instructed rotation speed detected in step S101 is greater than the threshold X. In a case where the rotation speed is less than or equal to the threshold X (NO in step S103), the processing proceeds to step S104. In a case where the rotation speed is greater than the threshold X (YES in step S103), the processing proceeds to step S105.

In step S104, the CPU 16 sets the driving current value to I1 (> I2) so as to give priority to reducing speed unevenness. The driving current value I1 corresponds to a first current value according to the present disclosure.

In step S105, the CPU 16 sets the driving current value to I2 (< I1) so as to given priority to reducing driving sound. The driving current value I2 corresponds to a second current value according to the present disclosure.

In step S106, the CPU 16 determines whether the user has turned off the power of the imaging apparatus 100 or the imaging apparatus 100 has entered a standby state. In a case where the imaging apparatus 100 is not in the power-off state or the standby state (NO in step S106), the processing returns to step S101 to repeat the processing of steps S101 to S106. In a case where the imaging apparatus 100 is in the power-off state or the standby state (YES in step S106), the processing of this flowchart ends.

As described above, the driving current value in the low-speed area of the rotation speed is controlled to be greater than the driving current value in the high-speed area of the rotation speed. Thus, speed unevenness can be reduced in the speed unevenness control area, and driving sound can be reduced in the driving sound control area. Consequently, an imaging apparatus capable of reducing driving sound and reducing speed unevenness can be provided.

The threshold X may be set for each imaging apparatus 100 through a verification process on speed uneven after the imaging apparatus 100 is assembled at a factory or the like. Alternatively, the user may check the speed unevenness on a display monitor or the like (not illustrated) and may set a desired rotation speed as the threshold X.

The driving current values I1 and I2 may be set in advance or may be set by the user. Although default values are set for the driving current values I1 and I2, for example, if the user does not mind the occurrence of speed unevenness in an area where the speed unevenness has occurred, it may be possible to allow the user to select a value smaller than the default value as the driving current value 11. In this case, power consumption can be reduced. If the user does not mind the driving sound in an area where the driving sound has occurred, it may be possible to allow the user to select a value greater than the default value as the driving current value I2. In this case, countermeasures against wind or the like can be enhanced by increasing the torque.

### (Second Embodiment)

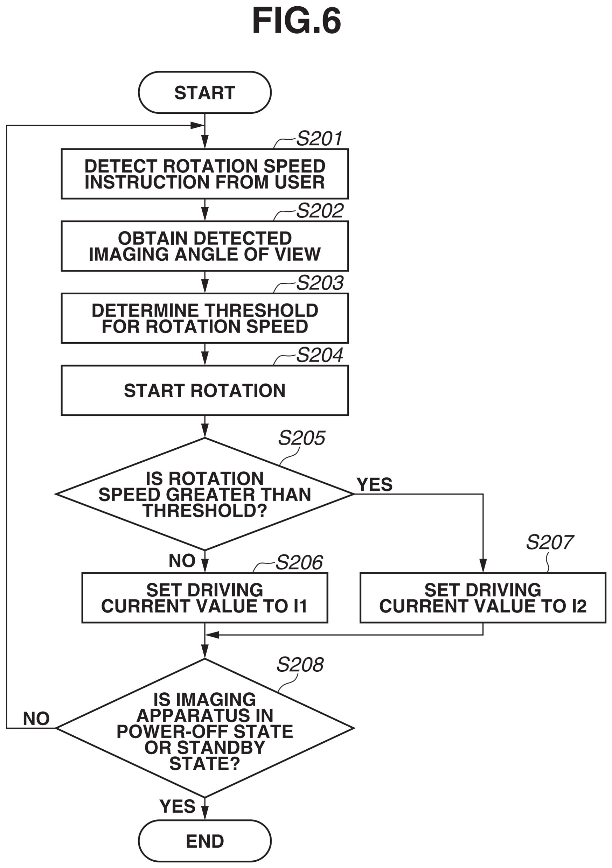

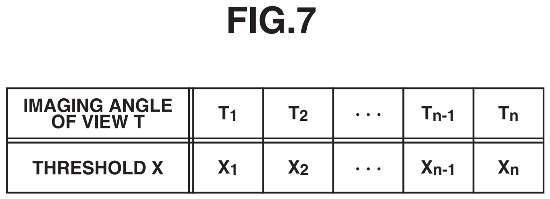

A second embodiment will be described with reference to Figs. 6 and 7. A basic configuration of the imaging apparatus 100 according to the second embodiment is similar to that of the imaging apparatus 100 according to the first embodiment. In the following description, components similar to those of the first embodiment are denoted by the same reference numerals and descriptions thereof are omitted. Only differences from the first embodiment will be described in detail.

In the first embodiment, the threshold X is set to a constant value regardless of the imaging angle of view, and the threshold X is set to the minimum rotation speed at which speed unevenness is not noticeable, for example, at the telephoto end. On the other hand, in the second embodiment, the threshold X is changed depending on the imaging angle of view.

A control operation of changing the driving current value based on the instructed rotation speed will be described with reference to Fig. 6. Fig. 6 is a flowchart illustrating an example of control processing to be performed by the imaging apparatus 100 according to the second embodiment. The processing of the flowchart illustrated in Fig. 6 is implemented such that the CPU 16 executes programs stored in the storage unit 17. The processing in this flowchart is started when the user makes the imaging apparatus 100 ready for the panning operation and the tilting operation. The processing in this flowchart may be executed separately for the panning operation and for the tilting operation.

Step S201 is a process similar to step S101 according to the first embodiment and the description thereof is omitted.

In step S202, the CPU 16 obtains an imaging angle of view T detected by the imaging angle-of-view detection unit 13.

In step S203, the CPU 16 sets the threshold X based on the imaging angle of view T obtained in step S202 using a table illustrating a relationship between the imaging angle of view T and the threshold X. The table is stored in the storage unit 17. Fig. 7 is an example of the table illustrating the relationship between the imaging angle of view T and the threshold X. Since speed unevenness is less noticeable at a wide angle, the threshold X is decreased so that the uneven speed control area becomes narrower as the imaging angle of view T increases. Specifically, if the imaging angle of view T satisfies T₁ < T₂ < ··· < Tₙ, the threshold X satisfies a relationship represented as X₁ > X₂ > ··· > Xₙ. Like the threshold X described in the first embodiment, the imaging angle of view T and the threshold X in the table may be set through processes such as verification and checking by the user at a factory or the like.

Steps S204 to S208 are processes that are respectively similar to steps S102 to S106 according to the first embodiment, and thus descriptions thereof are omitted.

As described above, like in the first embodiment, speed unevenness can be reduced in the speed unevenness control area and driving sound can be reduced in the driving sound control area. Consequently, an imaging apparatus capable of reducing driving sound and reducing speed unevenness can be provided.

In the second embodiment, the threshold X is changed depending on the imaging angle of view, thereby making it possible to increase the driving sound control area.

While the above-described embodiment illustrates an example where the table illustrating the relationship between the imaging angle of view T and the threshold X is prepared, the present embodiment is not limited to this example. For example, an arithmetic expression for obtaining the threshold X using the imaging angle of view T as a variable may be prepared, and the imaging angle of view T may be input to the arithmetic expression in step S203 so that the threshold X can be calculated and set.

### (Third Embodiment)

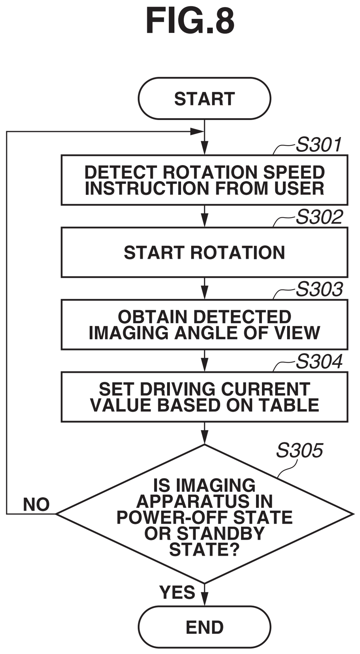

A third embodiment will be described with reference to Figs. 8 to 10. A basic configuration of the imaging apparatus 100 according to the third embodiment is similar to that of the imaging apparatus 100 according to the first embodiment. In the following description, components similar to those of the first embodiment are denoted by the same reference numerals and descriptions thereof are omitted. Only differences from the first embodiment will be described in detail.

In the first and second embodiments, a control operation of changing the driving current value is performed using the threshold X. In the third embodiment, a control operation of changing the driving current value is performed based on preliminarily set characteristics that represent a relationship among a rotation speed, an imaging angle of view, and a driving current value.

A control operation of changing the driving current value based on the instructed rotation speed will be described with reference to Fig. 8. Fig. 8 is a flowchart illustrating an example of control processing to be performed by the imaging apparatus 100 according to the third embodiment. The processing of the flowchart illustrated in Fig. 8 is implemented such that the CPU 16 executes programs stored in the storage unit 17. The processing in this flowchart is started when the user makes the imaging apparatus 100 ready for the panning operation and the tilting operation. The processing in this flowchart may be executed separately for the panning operation and for the tilting operation.

Steps S301 and S302 are processes that are respectively similar to steps S101 and S102 according to the first embodiment, and descriptions thereof are omitted.

In step S303, the CPU 16 obtains the imaging angle of view detected by the imaging angle-of-view detection unit 13.

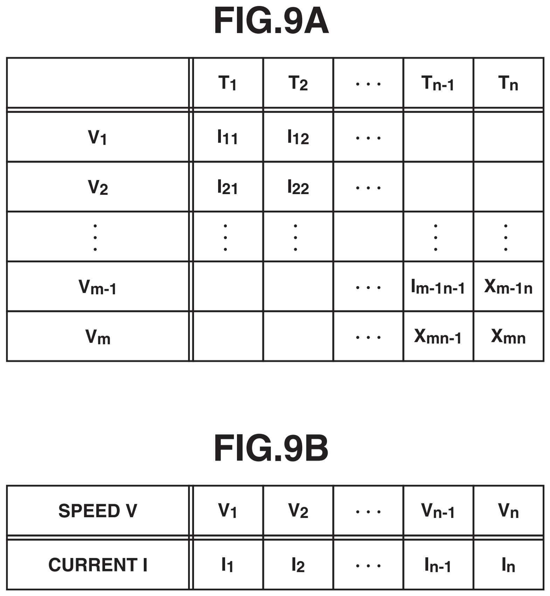

In step S304, the CPU 16 sets the driving current value I based on the instructed rotation speed detected in step S301 and the imaging angle of view obtained in step S303 using the table illustrating the relationship among a rotation speed V, the imaging angle of view T, and the driving current value I, and drives the motor based on the driving current value I. The table is stored in the storage unit 17. Fig. 9A is an example of the table illustrating the relationship among the rotation speed V, the imaging angle of view T, and the driving current value I. Fig. 9A represents a relationship in which the driving current value I decreases as the rotation speed V increases, and a relationship in which the driving current value I decreases as the imaging angle of view T increases.

Step S305 is a process that is similar to step S106 according to the first embodiment, and the description thereof is omitted.

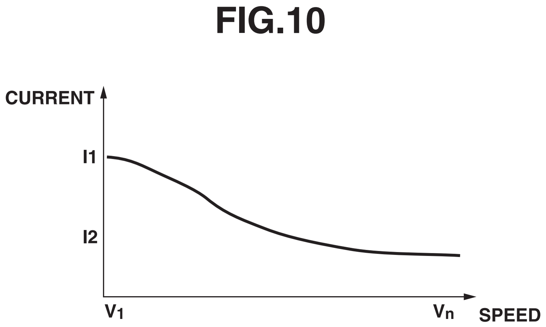

Fig. 10 is a graph illustrating an example of a relationship between a rotation speed (horizontal axis) and a driving current value (vertical axis).

As illustrated in Fig. 10, the CPU 16 in the imaging apparatus 100 performs a control operation of changing the driving current value based on the instructed rotation speed. In the present embodiment, the control operation can be performed such that the driving current value is gradually decreased or made constant as the rotation speed increases, instead of controlling the driving current value by dividing the rotation speed range (speed unevenness control area and driving sound control area) according to the first and second embodiments.

While the present embodiment illustrates an example of using the table illustrating the relationship among the rotation speed V, the imaging angle of view T, and the driving current value I, a table illustrating a relationship between the rotation speed V and the driving current value I may be used.

Fig. 9B is a table illustrating a relationship between the rotation speed V and the driving current value I. Fig. 9B represents a relationship (I₁ ≥ I₂ ≥ ··· ≥ Iₙ₋₁ ≥ Iₙ) in which the driving current value I decreases as the rotation speed V increases. The relationship between the rotation speed V and the driving current value I may be determined by assuming that the imaging angle of view corresponds to the telephoto end, where the influence range of speed unevenness with respect to the rotation speed is at its maximum. The rotation speed V, the imaging angle of view T, and the driving current value I in the table may be set through processes such as verification and checking by the user at a factory or the like.

As described above, the control operation is performed such that the driving current value in the low-speed area of the rotation speed is set to be greater than the driving current value in the high-speed area of the rotation speed. Thus, speed unevenness can be reduced in the uneven speed control area and driving sound can be reduced in the driving sound control area. Consequently, an imaging apparatus capable of reducing driving sound and reducing speed unevenness can be provided.

While the above-described embodiment illustrates an example where the table illustrating the relationship among the rotation speed V, the imaging angle of view T, and the driving current value I (or the table illustrating the relationship between the rotation speed V and the driving current value I) is prepared, the present embodiment is not limited to this example. For example, an arithmetic expression for obtaining the driving current value I using the rotation speed V and the imaging angle of view T as variables may be prepared, and the rotation speed V and the imaging angle of view T may be input to the arithmetic expression in step S304 so that the driving current value I can be calculated and set.

### (Fourth Embodiment)

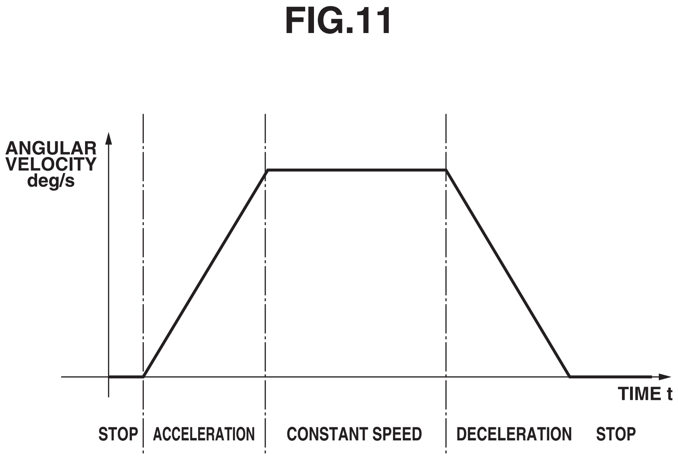

A fourth embodiment will be described with reference to Figs. 11 to 18. A basic configuration of the imaging apparatus 100 according to the fourth embodiment is similar to that of the imaging apparatus 100 according to the first embodiment. In the following description, components similar to those of the first embodiment are denoted by the same reference numerals, and descriptions thereof are omitted. Only differences from the first embodiment will be described in detail.

In the fourth embodiment, a configuration in which an operation of changing (switching) the driving current value based on the rotation speed and a control change (switching) operation other than the operation of changing the driving current value based on the rotation speed will be described. The fourth embodiment illustrates an example where a constant voltage control operation and a constant current control operation are switched as a control switching operation will be described.

Fig. 11 is a graph illustrating an example of a speed control operation for the drive unit, and illustrates the rotation speed of the drive unit over time t. Fig. 11 also illustrates a state where the rotation speed transitions to "stop", "acceleration", "constant speed", "deceleration", and "stop" in this order.

While Fig. 11 illustrates a simple example of acceleration and deceleration, the rotation speed can also transition to a deceleration state and a constant-speed state during acceleration.

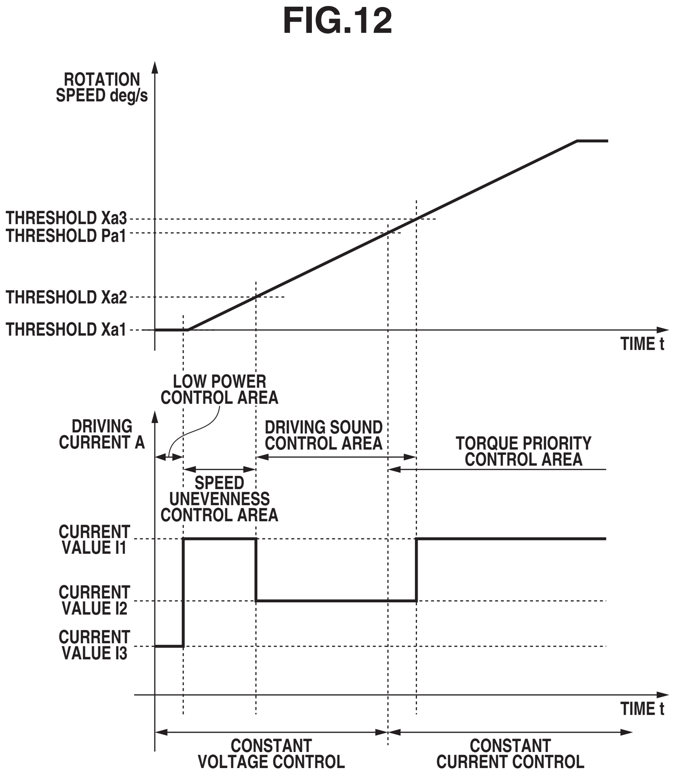

Fig. 12 is a graph illustrating a state of each of a control switching operation and a driving current value switching operation, and illustrates the control switching operation and the driving current value switching operation during acceleration.

First, the control switching operation will be described.

The constant voltage control operation refers to a feedforward control operation to be performed by pulse width modulation (PWM) with a voltage preliminarily set so that the driving current has a predetermined value. In the constant voltage control operation, there is no need to monitor the driving current. Accordingly, the PWM frequency is set to a high value to reduce the fluctuation range of the current, thereby making it possible to reduce driving sound. Further, since the PW frequency can be fixed, driving sound can be reduced by setting the frequency to fall outside the audible frequency range.

In contrast, in the constant current control operation, feedback control is performed by monitoring the driving current value so that the driving current value can be set to a desired value. Accordingly, fluctuations of low frequencies of the current and the like are also fed back, making the constant current control operation disadvantageous compared to the constant voltage control operation in terms of speed unevenness and driving sound. On the other hand, since the drive current is monitored, feedback control works to increase the drive current when it is insufficient. As a result, the constant current control operation can increase torque more effectively than the constant voltage control operation when torque is lacking, allowing the control operation to be performed at higher speeds.

Fig. 12 illustrates a state where a control operation suitable for each speed area (e.g., power control area) is set. The control operation is switched such that the constant voltage control operation is performed on the low-speed side and the constant current control operation is performed on the high-speed side. A threshold used in this case is illustrated as a threshold Pa1. In the case of increasing or decreasing the driving current at the threshold Pa1, jerk occurs due to a transition in the driving current. The jerk has an influence on speed unevenness and driving sound. Therefore, the influence of the jerk is suppressed by preventing the control switching operation and the driving current value switching operation from overlapping each other. Thresholds for the control switching operations are hereinafter collectively referred to as "Pa".

These control operations and control switching operations are executed by the CPU 16. The CPU 16 has the function of the control unit to control the drive unit.

Next, driving current values for the respective areas (e.g., low power control area, speed unevenness control area, driving sound control area, and torque priority control area) illustrated in Fig. 12 will be described.

The low power control area corresponds to a stop period in which the driving current value is set depending on torque required for holding. If the torque required for holding is small, the driving current value can be reduced to eliminate unnecessary power consumption. Therefore, the driving current is set to a driving current value I3 that is smaller than the driving current value I2.

Like in the first embodiment, the speed unevenness control area is set to the driving current value I1.

Like in the first embodiment, the driving sound control area is set to the driving current value I2.

The period of the torque priority control area corresponds to a speed area in which the rotation speed is high and torque is required. Therefore, the torque priority control area is set to a higher driving current value, i.e., the driving current value 11.

Thresholds for switching these driving current values are illustrated as a threshold Xa1, a threshold Xa2, and a threshold Xa3. In the case of increasing or decreasing the current at the thresholds Xa1, Xa2, and Xa3, jerk occurs when the current transitions. Thresholds for switching the driving current values are collectively referred to as "Xa". The threshold Xa is a threshold for switching the driving current values, like the threshold X illustrated in Fig. 3 and the thresholds X1 and X2 illustrated in Fig. 4.

The relationship between the threshold Pa and the threshold Xa will be described. The threshold Pa and the threshold Xa are thresholds for speed. It is determined whether the rotation speed calculated by the CPU 16 exceeds the thresholds. It is desirable to introduce hysteresis to each threshold in order to prevent hunting. However, the threshold Xa1 that overlaps the threshold for switching between the stop state and the driving state need not necessarily be a threshold for speed. The driving current value may be switched before the rotation starts using a driving start command as a starting point.

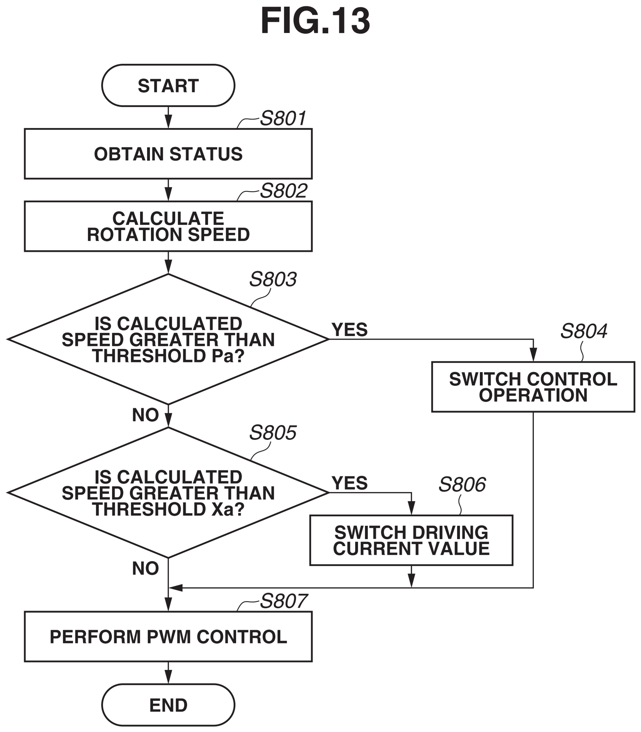

A processing procedure according to the present embodiment will be described with reference to Fig. 13. Fig. 13 is a flowchart illustrating an example of control processing to be performed by the imaging apparatus 100 according to the fourth embodiment, and illustrates a procedure for performing the current value switching operation and the control switching operation based on a speed as a threshold. The processing of the flowchart illustrated in Fig. 13 is implemented such that the CPU 16 executes programs stored in the storage unit 17.

In step S801, the CPU 16 obtains the status of the drive unit. The status includes current control (constant voltage control, constant current control) settings, a target speed, positional information about the rotation of the drive unit, driving states (stop, acceleration, constant speed, deceleration), a driving current value for a driving current, and a frequency setting for a driving current. If the imaging apparatus 100 also has a current detection function and a position detection function, the CPU 16 obtains information about the current and the position.

In step S802, the CPU 16 calculates the rotation speed. For example, the rotation speed can be calculated based on the frequency of the driving current to be set. If the drive unit is provided with a speed reduction mechanism (gear), the driving speed is calculated by multiplying the reduction ratio of the speed reduction mechanism.

In step S803, the CPU 16 determines whether the speed calculated in step S802 is greater than the threshold Pa. If the speed is greater than the threshold Pa (YES in step S803), the processing proceeds to step S804 to transition from the current control setting. If the speed is not greater than the threshold Pa (NO in step S803), the current control setting is not changed, and thus the processing proceeds to step S805.

In step S804, since the speed is greater than the threshold Pa, the CPU 16 performs the control switching operation.

In step S805, the CPU 16 determines whether the speed calculated in step S802 is greater than the threshold Xa. If the calculated speed is greater than the threshold Xa (YES in step S805), the processing proceeds to step S806 to transition from the current driving current value setting. If the calculated speed does not exceed the threshold Xa (NO in step S805), the current control setting is not changed, and thus the processing proceeds to step S807.

In step S806, since the speed is greater than the threshold Xa, the CPU 16 performs the driving current value switching operation.

In step S807, the CPU 16 performs PWM control on the drive unit based on the changed setting.

Since the threshold Pa and the threshold Xa are set to respective different speeds, the determination in step S803 and the determination in step S805 may be performed simultaneously. However, the switching operations in steps S804 and S806 are not assumed to be performed simultaneously during the driving operation.

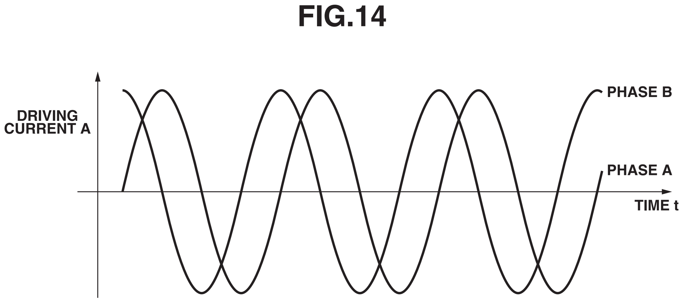

A control operation for the stepping motor will be described with reference to Fig. 14. In the present embodiment, a two-phase (phase A, phase B) stepping motor is used as a motor for the drive unit. Fig. 14 illustrates current waveforms of the two-phase stepping motor, and illustrates a state where the two-phase stepping motor is driven in micro steps. The phase A and the phase B have a phase difference of 90 degrees, and the excitations of the phase A and the phase B transition, thereby allowing the motor to be rotated. The rotational direction is determined based on whether the phase difference is lagging or leading. The stepping motor performs micro-step control to perform the driving operation in which vibrations are suppressed. Fig. 14 illustrates a driving state in micro-step control. The description is given based on a case where the current waveform of the phase A is a sine curve. In the step control (constant voltage control, constant current control) for the stepping motor, the speed is determined based on the frequency of the driving current. Accordingly, the CPU 16 obtains information about the frequency of the current waveform set in the drive unit, thereby making it possible to calculate the rotation speed of the stepping motor. The torque of the stepping motor can be increased as the driving current value is increased. In current waveform diagrams to be described below, descriptions of frequency changes are omitted for clarity of explanation. In practice, when a threshold is exceeded, the frequency varies as the speed varies.

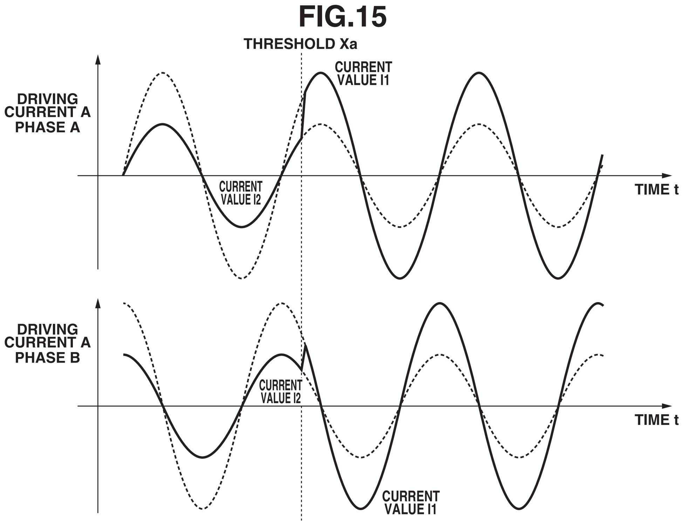

Jerk that occurs due to switching of the driving current value will be described with reference to Fig. 15. Fig. 15 illustrates current waveforms when the driving current value is switched. Fig. 15 illustrates a state where the driving current value is switched from the driving current value I2 to the driving current value I1 in each of the current waveform of the phase A and in the current waveform of the phase B. In Fig. 15, a state where the driving current is increased and exceeds the threshold Xa is indicated by a solid line.

In the threshold Xa, when the driving current value is changed, the driving current deviates from the sine curve and varies in a discontinuous manner. In this case, jerk occurs. Ideally, jerk does not occur if the driving current of the phase A and the driving current of the phase B transition immediately and the current ratio is maintained. However, in practice, inductor components of the motor prevent the driving current from transitioning immediately, so that jerk occurs. In the following description of current waveforms, unless otherwise noted, only one of the phase A and the phase B is described.

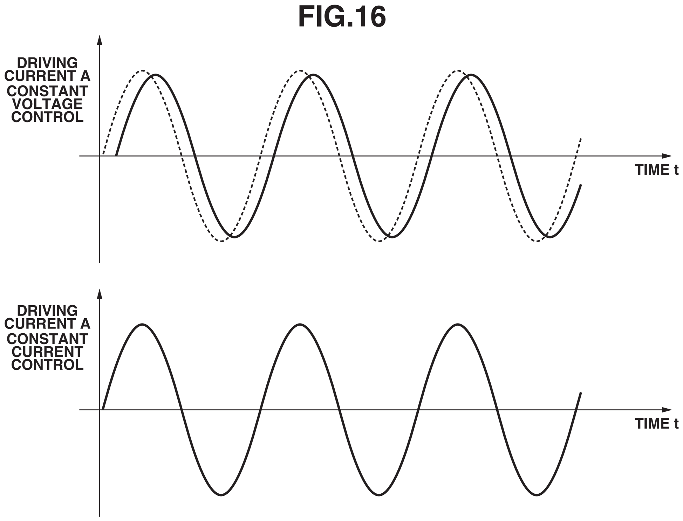

A current waveform for the constant voltage control operation and a current waveform for the constant current control operation will be described with reference to Fig. 16. Fig. 16 illustrates a current waveform for the constant voltage control operation and a current waveform for the constant current control operation. In both of the constant voltage control operation and the constant current control operation, if the speed is sufficiently low, the waveform appears as the same sine curve on a macro scale. Ideally, it is possible to switch the control operations without generating jerk. However, when the drive unit is driven with a certain rotation speed, a phase difference occurs in the constant voltage control operation. In this case, the peak of the driving current is decreased as the speed is increased in the constant voltage control operation.

On the other hand, in the constant current control operation, the current is monitored, and thus a phase difference is less likely to occur as compared with the constant voltage control operation. Further, the peak of the current is less likely to be lowered as compared with the constant voltage control operation. However, if the speed is further increased, the waveform cannot follow the speed, and thus has a triangular wave shape (not illustrated). Thus, since the shape of the waveform varies depending on the control operation, jerk occurs during the control switching operation. For this reason, it is desirable that the control switching operation is performed at a speed where a current waveform is close to a sine curve and distortion is minimal in the constant current control operation.

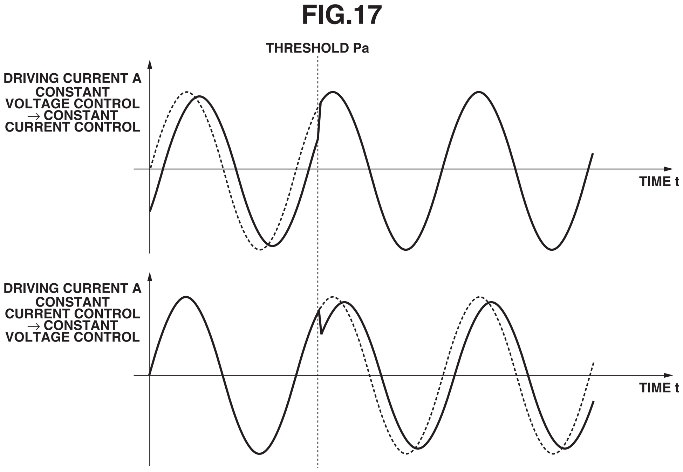

Jerk that occurs during the control switching operation will be described with reference to Fig. 17. Fig. 17 illustrates a state where jerk occurs during the control switching operation. Fig. 17 illustrates a state where jerk occurs when the control operation is switched from the constant voltage control operation to the constant current control operation and a state where jerk occurs when the control operation is switched from the constant current control operation to the constant voltage control operation. As described above with reference to Fig. 15, a phase difference occurs depending on the control operation, so that jerk occurs due to a step change in current during the switching operation. In the present embodiment, the threshold Pa for the control switching operation illustrated in Fig. 17 and the threshold Xa for the driving current value switching operation illustrated in Fig. 15 are each determined based on the speed, and the threshold Pa and the threshold Xa are set to respective different speeds. This prevents the control switching operation and the driving current value switching operation from overlapping each other and suppresses the occurrence of jerk.

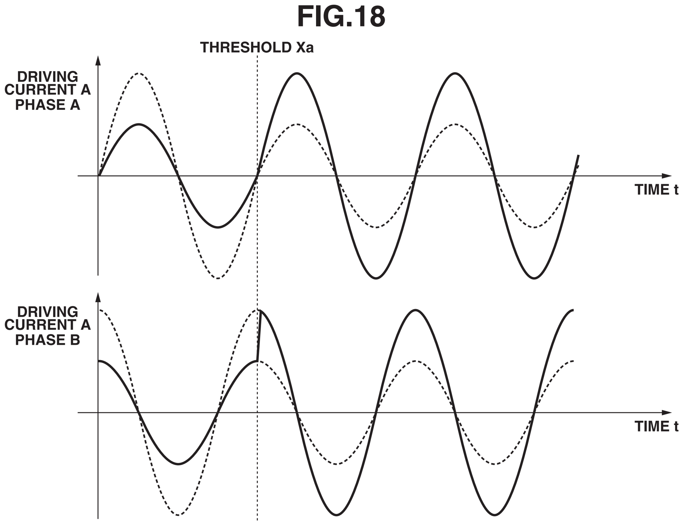

The occurrence of jerk during the driving current value switching operation is supplementarily described with reference to Fig. 18. Fig. 18 illustrates a state where jerk occurs when the driving current value is switched, and illustrates a state when the switching phase is different from that illustrated in Fig. 15. In the ideal waveform of the sine curve, the current is always zero at the zero-crossing point, regardless of the driving current value setting, so that jerk does not occur. However, since there is a phase difference of 90 degrees between the phase A and the phase B, there is no point where the current values of the phase A and the phase B are "0" simultaneously, therefore jerk cannot be avoided. Further, since the motor is rotated based on the current ratio between the phase A and the phase B, the current values of the phase A and the phase B cannot be changed independently. Accordingly, jerk occurs each time when the driving current value is switched. To stabilize the transition state, it is desirable that the switching phase is set to a fixed position such as 0 degrees, 45 degrees, or 90 degrees.

A control change prohibition interval (time) after the control switching operation and after the driving current value switching operation will be described. After the control switching operation and after the driving current value switching operation, the control waveform and inertia moment become unstable, so that the control operation cannot be stably performed in some cases. Accordingly, it is desirable to set the interval (time) during which the control switching operation and the driving current value switching operation are not performed until the control operation is stabilized after the control switching operation and after the driving current value switching operation. If a control state can be detected (position sensor, voltage detection, current detection), it is desirable to determine whether the control operation is stable in real time based on the detection result during the time. If the control state cannot be detected, a prohibition interval can be set in advance. In the case of setting the prohibition interval in advance, the prohibition interval is determined based on the inductance components and resistance components of the motor, a voltage to be used or the like, the vibration characteristics of the motor, and the like. Furthermore, it is desirable to set the interval while actually observing the waveform. The prohibition interval is set within the value range, such as 100 ms, which has no influence on the responsiveness.

The driving current value switching operation is supplementarily described. While Fig. 15 illustrates binary switching between the driving current value I1 and the driving current value I2, the driving current value I1 and the driving current value I2 may be allowed to transition stepwise as described above in the first embodiment. This configuration makes it possible to suppress the occurrence of jerk during the switching operation.

The constant voltage control operation and the constant current control operation are supplementarily described. While Fig. 12 illustrates an example where the constant voltage control operation is performed on the low-speed side and the constant current control operation is performed on the high-speed side, the present embodiment is not limited to this example. The present embodiment can also be applied to an example where the constant current control operation may be performed on the low-speed side and the constant voltage control operation may be performed on the high-speed side.

While the present embodiment illustrates an example of the acceleration state, the present embodiment can also be applied to a deceleration state. While the present embodiment illustrates a state where acceleration is performed monotonically, the present embodiment is not limited to this example and can also be applied to any other state.

Furthermore, while the present embodiment illustrates an example where a two-phase stepping motor is used, a multi-phase stepping motor having three or more phases may also be used.

### (Fifth Embodiment)

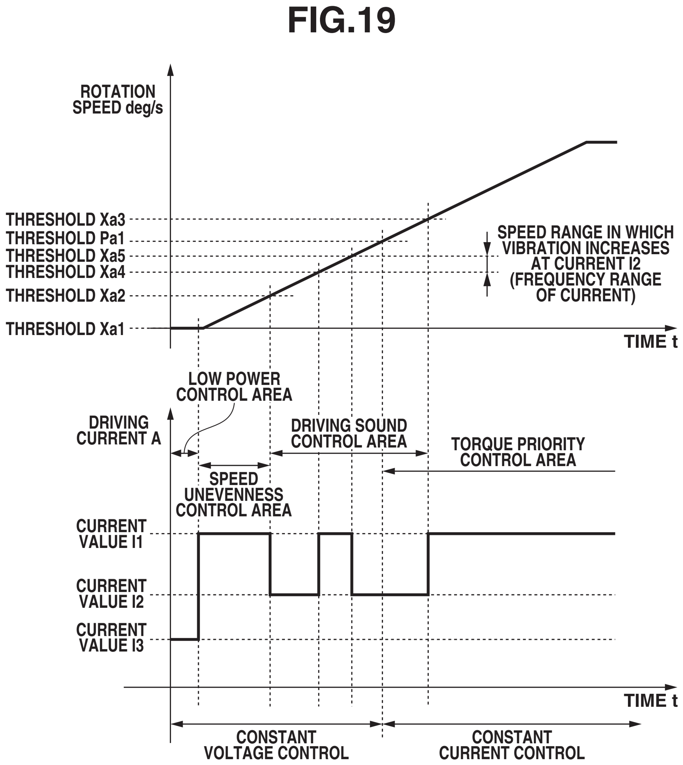

A fifth embodiment will be described with reference to Fig. 19. In the fifth embodiment, suppression of driving sound by reducing a driving current will be described.

Fig. 19 is a graph illustrating a state of the control switching operation and a state of the driving current value switching operation, and illustrates a state where a driving sound is suppressed by switching the driving current value. In Fig. 19, a threshold Xa4 and a threshold Xa5 are added to the graph of Fig. 12. Motor vibration is sensitive to the driving current value, and when the driving current value is changed, the motor's vibration-frequency characteristics (i.e., the frequency of the current) transition accordingly. If the vibration of the motor is large, driving sound of the imaging apparatus 100 also increases due to the large vibration.

Accordingly, as illustrated in Fig. 19, the threshold Xa4 is set in the speed range in which the vibration starts to increase when the driving current is the driving current value I2, and the driving current value is changed to the driving current value I1. Changing the current in this manner allows the peak of the vibration of the motor to transition and thus suppresses driving sound. In a period after the period in which the vibration becomes larger under the driving current value 11, it is desirable to reduce the driving current value and switch to the driving current value I2 in order to suppress driving sound (not illustrated). In this case, the threshold Xa4 and the threshold Xa5 are set to values different from the threshold Pa for control, thereby preventing switching operations from overlapping each other and suppressing the occurrence of jerk.

### (Sixth Embodiment)

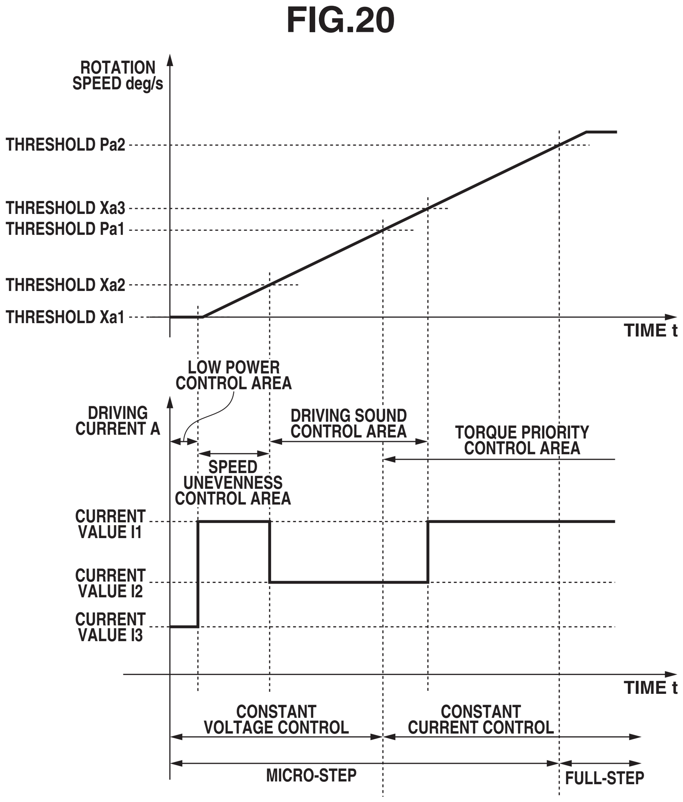

A sixth embodiment will be described with reference to Figs. 20 to 22. In the sixth embodiment, switching between micro-step control and full-step control (switching of division number of step control) is performed.

Fig. 20 is a graph illustrating a state of the control switching operation and a state of the driving current value switching operation, and illustrates switching between micro-step control and full-step control. In Fig. 20, a threshold Pa2 for switching between micro-step control and full-step control is added to the graph of Fig. 12. The micro-step control is a control operation in which one mechanical step in a step control is divided into a plurality of steps by driving the motor with a sine wave. Thus, in micro-step driving, smooth rotation can be obtained, and thus speed unevenness and driving sound can be improved compared to full-step driving. However, the micro-step control tends to produce less torque compared to full-step driving, which drives the motor at each mechanical step. Accordingly, the micro-step control may be switched to the full-step control so as to increase the speed. In this case, the threshold Pa2 is set to a value different from the threshold Xa for the driving current value, thereby preventing overlapping of switching operations and suppressing the occurrence of jerk.

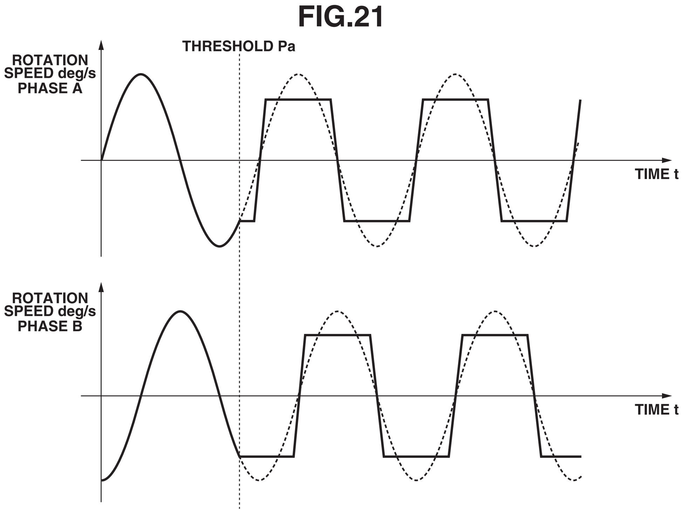

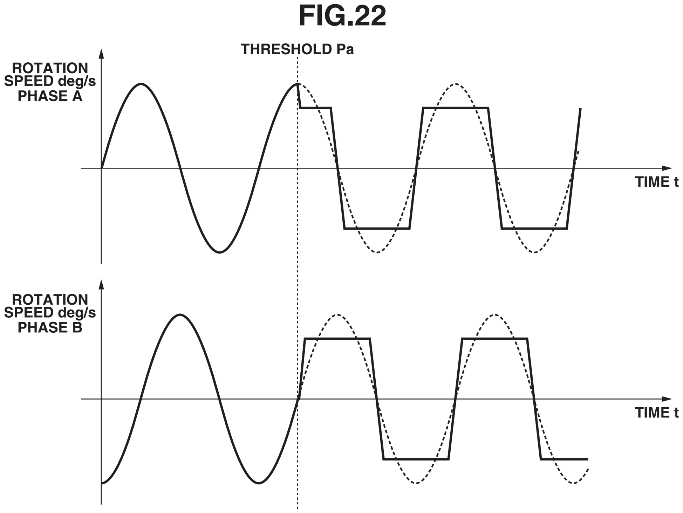

Micro-step driving and full-step driving are supplementarily described with reference to Figs. 21 and 22.

Fig. 21 illustrates current waveforms when micro-step driving and full-step driving are switched at 315 degrees. Fig. 21 illustrates a current of the phase A and a current of the phase B. Fig. 21 also illustrates a state where micro-step driving and full-step driving are switched at a phase at which the driving current value for full-step driving and the driving current value for micro-step driving overlap each other. In this case, the current waveform changes from the sine curve of micro-step control to the trapezoidal shape of full-step control, resulting in a change in the current ratio and causing a jerk during the switching operation.

While the present embodiment illustrates an example where micro-step driving and full-step driving are switched at 315 degrees, the present embodiment can also be applied to cases where micro-step driving and full-step driving are switched at 45 degrees, 135 degrees, or 225 degrees.

Fig. 22 illustrates current waveforms when micro-step driving and full-step driving are switched at 90 degrees. In this case, the driving current for micro-step driving and the driving current for full-step driving do not match, and the driving current of at least one of the phase A and the phase B undergoes a large transition, so that a larger jerk than in the example illustrated in Fig. 14 occurs. While the present embodiment illustrates an example where micro-step driving and full-step driving are switched at 90 degrees, the present embodiment can also be applied to cases where micro-step driving and full-step driving are switched at 0 degrees, 180 degrees, or 270 degrees.

At phases other than the phases illustrated in Figs. 21 and 22, the phase A and the phase B transition simultaneously, so that jerk occurs.

If the speed is increased to some extent, the waveform may be distorted, and jerk may occur at any phase.

Switching between micro-step control and full-step control is supplementarily described. While the present embodiment illustrates binary switching between micro-step control and full-step control, the division number of micro-step control may transition stepwise, for example, from 256 divisions to 128 divisions, and then to 64 divisions. This configuration makes it possible to suppress the occurrence of jerk during the switching operation.

### (Seventh Embodiment)

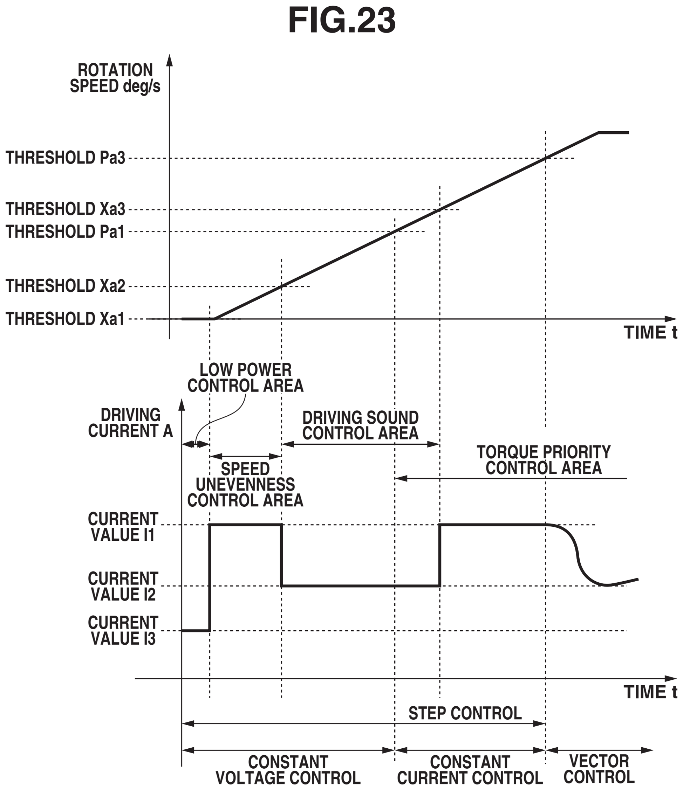

A seventh embodiment will be described with reference to Fig. 23. In the seventh embodiment, switching between step control (constant voltage control, constant current control) and vector control will be described.

Fig. 23 is a graph illustrating a state of the control switching operation and a state of the driving current value switching operation, and illustrates a state where a step control operation and a vector control operation are switched. In the graph of Fig. 23, a threshold Pa3 for switching between the step control operation and the vector control operation is added to the graph of Fig. 12. The vector control operation includes a vector control operation with a position sensor in which the control operation is performed by feeding back positional information from the position sensor such as an encoder, and a vector control operation without a position sensor in which positional information is predicted based on the voltage and driving current of the motor. In any of the vector control operations, the motor is driven with a corrected drive current that compensates for any deviation in the rotational position of the motor, so that the motor can be driven while adjusting the driving current value as needed. On the other hand, in the step control operation, a positional deviation is not detected, and thus a driving current value is set with a safety margin so as to prevent step-out. The driving operation can be performed with lower power consumption corresponding to the safety margin in the vector control operation.

Switching between the step control operation and the vector control operation is desirably performed between the constant current control operation and the vector control operation in which the phase of the motor can be managed by detecting a current. This facilitates management of the phase and the driving current value. In this case, if the driving current value for the constant current control operation is changed at the same timing as the switch to the vector control operation, a vector control convergence time increases due to the occurrence of jerk. Since the control operation may become unstable during the convergence period, speed unevenness and driving sound may be increased due to the vibration. Therefore, the threshold Pa3 for switching between the step control operation and the vector control operation is also set to a speed different from that of the threshold Xa for switching the driving current value.

This configuration makes it possible to prevent the switching operations from overlapping each other and suppress the occurrence of jerk.

The control operation can be stably switched by setting the prohibition interval described in the first embodiment in switching between the step control operation and the vector control operation.

### (Eighth Embodiment)

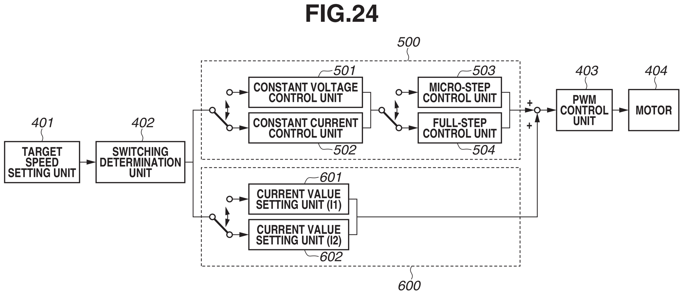

An eighth embodiment will be described with reference to Figs. 24 to 28. In the eighth embodiment, an example of a configuration for implementing a control switching operation and a driving current value switching operation will be described.

Fig. 24 is a block diagram illustrating an example of a configuration for implementing the control switching operation and the driving current value switching operation. As illustrated in Fig. 24, this configuration example includes a target speed setting unit 401, a switching determination unit 402, a control switching block 500, a driving current value switching block 600, and a PWM control unit 403 for controlling a motor 404.

The target speed setting unit 401 sets a target speed based on a command from the user and updates the target speed at each control cycle.

The switching determination unit 402 calculates a speed for determining the control switching operation and the driving current value switching operation, and determines the switching operation.

In the control switching block 500, a constant voltage control unit 501 performs the constant voltage control operation.

A constant current control unit 502 performs the constant current control operation. The constant voltage control operation and the constant current control operation are switched based on a result of determination made by the switching determination unit 402.

A micro-step control unit 503 performs micro-step control. A full-step control unit 504 performs full-step control. The micro-step control and the full-step control are switched based on a result of determination made by the switching determination unit 402.

The PWM control unit 403 performs PWM control based on the speed determined by the switching determination unit 402 and drives the motor 404.

The constant voltage control unit 501 and the constant current control unit 502 can calculate the speed from the target speed, since they control the frequency of the driving current based on the target speed. The same applies to the micro-step control unit 503 and the full-step control unit 504.

In the driving current value switching block 600, driving current value settings are made in the step control operation. Switching is carried out by a current value setting unit (11) 601 and a current value setting unit (I2) 602.

The control switching block 500 and the driving current value switching block 600 perform switching operations with respective different speeds, based on a result of determination made by the switching determination unit 402.

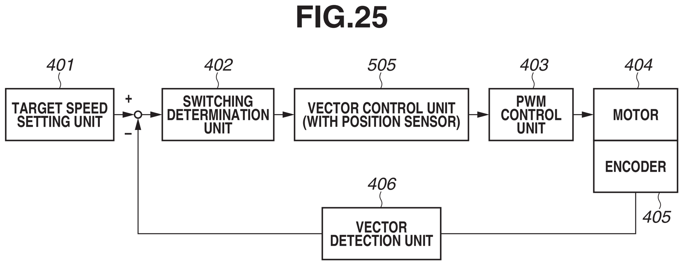

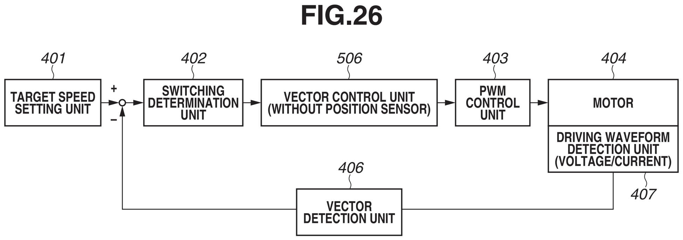

In the case of performing the driving operation only by step control, detection of the actual speed, like in the vector control operation, is not essential, and therefore it is not illustrated in Fig. 24. However, as illustrated in Figs. 25 and 26, the actual speed can be detected and the switching determination unit 402 can determine switching of the control operation based on the speed. In Fig. 24, a PWM control waveform that is generated by feeding back the current in the constant current control operation is not related to the speed, and thus the illustration thereof is omitted.

A vector control operation with a position sensor will be described with reference to Fig. 25. Fig. 25 is a block diagram illustrating an example of a configuration for implementing the vector control operation with the position sensor. Descriptions of contents that are same as those illustrated in Fig. 24 are omitted. A vector control unit (with position sensor) 505 performs a vector control operation with a position sensor. A vector detection unit 406 obtains positional information from an encoder 405, which is attached to the motor 404, and calculates a vector (detection speed and torque). The switching determination unit 402 determines the switching operation based on the speed calculated by the target speed setting unit 401 or the vector detection unit 406. In the case of using the vector control operation, the switching operation is determined based on the speed calculated by the vector detection unit 406 as the actual speed, so that the control operation can be stably switched. However, the switching operation may be determined based on the target speed. The position sensor may be attached to any position as long as the rotation position can be detected in conjunction with the motor 404. For example, the position sensor may be attached to the rotation shaft of the motor 404, or may be attached to the last stage of the gear.

A vector control operation without a position sensor will be described with reference to Fig. 26. Fig. 26 is a block diagram illustrating an example of a configuration for implementing the vector control operation without the position sensor. Descriptions of contents identical to those in Figs. 24 and 25 are omitted. A vector control unit (without position sensor) 506 performs the vector control operation without the position sensor. The vector detection unit 406 obtains driving waveform information (voltage/current) from a driving waveform detection unit 407, which is attached to the motor 404, and calculates a vector (detection speed and torque). The rotation speed of the motor 404 can be calculated from a back electromotive force, and the torque can be calculated from the driving current. Unlike in the step control operation, in the vector control operation, the driving current value is set based on the vector, and there are no driving current value settings as in the step control operation. The switching determination unit 402 determines the switching operation based on the speed calculated by the target speed setting unit 401 or the vector detection unit 406. In the case of using the vector control operation, the switching operation is determined based on the speed calculated by the vector detection unit 406 as the actual speed, so that the control operation can be stably switched. However, the switching operation may be determined based on the target speed.

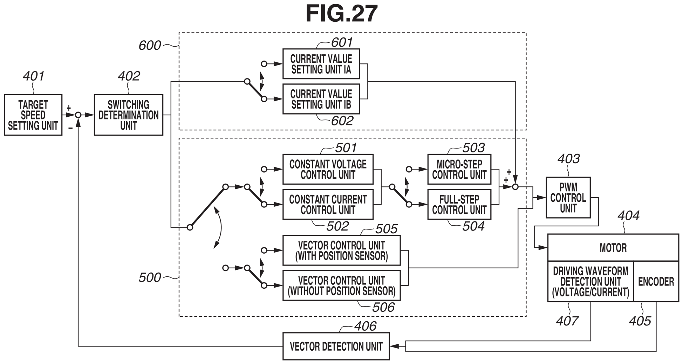

The control switching operation including the vector control operation will be described with reference to Fig. 27. Fig. 27 is a block diagram illustrating an example of a configuration for implementing switching of the control operation and switching of the driving current value in a case where the control switching operation includes the vector control operation. The configuration illustrated in Fig. 27 differs from the configuration illustrated in Fig. 24 in that the vector control unit (with position sensor) 505 and the vector control unit (without position sensor) 506 are added to the control switching block 500. While the present embodiment illustrates a state of switching operations to be performed by the constant voltage control unit 501, the constant current control unit 502, the vector control unit (with position sensor) 505, the vector control unit (without position sensor) 506, the micro-step control unit 503, and the full-step control unit 504, any other configuration can be applied as long as one of the control switching operation and the driving current value switching operation can be performed.

Values used for determination by the switching determination unit 402 will be described. If there is a plurality of speed calculation units (target speed setting unit 401, driving waveform detection unit 407, encoder 405, etc.), the switching operation is determined based on the value calculated by any one of the speed calculation units. Alternatively, a plurality of calculation units may perform weighting operations to calculate the speed. However, it is necessary to uniquely determine the speed. The calculation units and the weighting ratios can be changed based on the control switching state, the speed, or the like, but the speed to be used for a single determination process is uniquely determined. For example, in switching between the step control operation and the vector control operation, feedback control suitable for actual rotation is active in the vector control operation, and thus it is desirable that the switching operation is determined based on the speed calculated by the vector detection unit 406. In switching within the step control range, the control operation is performed based on the target speed. Accordingly, it is desirable that the switching operation is determined based on the speed calculated based on the target speed.

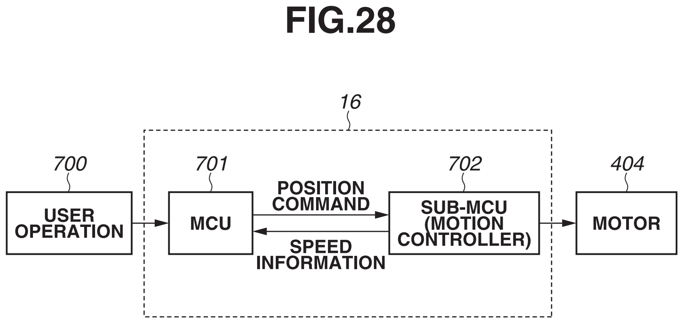

A case where the control unit (CPU 16) includes a plurality of control devices and the control switching operation and the driving current value switching operation are switched by different devices will be described with reference to Fig. 28. Fig. 28 is a block diagram illustrating an example of a hardware configuration of the control unit (CPU 16). A user operation 700 is a pan/tilt operation to be performed by the user using a remote controller or the like. A micro controller unit (MCU) 701 issues a position command to a sub-MCU 702 based on the user operation 700. The sub-MCU 702 is an MCU including a motion controller, and generates a PWM control waveform based on the position command from the MCU 701 and the current status (speed, position, type of control, etc.). In this case, the control switching operation and the driving current value switching operation may be controlled by different MCUs. A case where the MCU 701 performs the driving current value switching operation based on speed information and the sub-MCU 702 performs the control switching operation based on speed information will be described. The MCU 701 and the sub-MCU 702 communicate with each other via serial communication. In this case, even when the MCU 701 and the sub-MCU 702 determine the switching operation based on the same speed information, the control switching operations may be performed at the same time depending on the timing of communication between the MCU 701 and the sub-MCU 702. Accordingly, it is possible to prevent the switching operations from overlapping each other by setting a priority to each of the MCU 701 and the sub-MCU 702. For example, the priority of the MCU 701 is set to be higher than the priority of the sub-MCU 702, and the control switching operation for the sub-MCU 702 can be permitted only during a period in which the driving current value switching operation is not permitted by the MCU 701. In this manner, even in the case of using a plurality of MCUs, setting the priorities makes it possible to prevent overlapping of the switching control operations and suppress the occurrence of jerk. Regarding the priority, a control operation prioritizing torque or a driving current value switching operation is performed to prevent step-out. On the other hand, in the case of giving priority to speed unevenness or driving sound, a control operation or a driving current value switching operation suitable for each is performed.

A method for calculating the speed to be used for determination of the threshold is supplementarily described. Even when there is a plurality of speeds to be calculated, it is determined whether the calculated speed exceeds a threshold based on a specific speed. If the thresholds are determined based on speeds calculated by different calculation methods, the thresholds may overlap each other due to an error dependent on the calculation method even when the thresholds are set for different speeds. However, if the interval between the thresholds is sufficiently larger than the range of the error between the speeds, it may be determined whether the thresholds are exceeded, based on the speeds calculated by different calculation methods. The speed calculation method may be changed based on the current status (speed, position, type of control, time after the control switching operation, time after the driving current value switching operation, etc.). Alternatively, weighting operations may be performed on values obtained by different calculation methods to calculate the speed.

A case where two different thresholds are exceeded within a control cycle is supplementarily described. In this case, instead of performing two switching operations simultaneously, it is desirable that the switching operations can be sequentially performed by setting a priority to each threshold. This configuration makes it possible to suppress the occurrence of jerk. While the present embodiment illustrates a case of two thresholds as an example, the present embodiment can be applied to cases involving three or more thresholds.

In addition, it may be determined whether to execute the driving current value switching operation based on the current status. For example, feedback control is not active in the constant voltage control period, and thus switching the driving current value may result in malfunction. Therefore, it is acceptable to define a period in which the driving current value switching operation is not performed during the constant voltage control operation. In this case, the driving current value switching operation is performed after the control operation is switched to the constant current control operation.

While the present disclosure has been described above with reference to embodiments, the above-described embodiments are merely examples for embodying the present disclosure. The present disclosure should not be interpreted in a limited way by the embodiments. That is, the present disclosure can be carried out in various forms without departing from the technical idea or the main features thereof.

For example, the configuration of the imaging apparatus 100 illustrated in Figs. 1 and 2 is merely an example, and the configuration of the imaging apparatus 100 is not limited to this example.

According to the present disclosure, it is possible to provide an imaging apparatus capable of reducing both driving sound and speed unevenness.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An imaging apparatus (100) comprising:
an imaging means (1);
a drive means (2, 3) for rotating the imaging means; and
a control means (16) for controlling a first current value to be applied to the drive means in a case where a rotation speed is less than or equal to a threshold, and controlling a second current value smaller than the first current value to be applied to the drive means in a case where the rotation speed is greater than the threshold,
wherein the threshold is a rotation speed preliminarily set based on the presence or absence of speed unevenness.

2. The imaging apparatus according to claim 1, further comprising a zoom driving means for changing an imaging angle of view of the imaging means,
wherein the control means is configured to change the threshold based on the imaging angle of view.

3. The imaging apparatus according to claim 1 or 2, wherein, if the rotation speed is above the threshold and up to a predetermined rotation speed greater than the threshold, the control means is configured to gradually reduce a current value to be applied to the drive means from the first current value to the second current value.

4. The imaging apparatus according to claim 1 or 2, further comprising:
a pan driving means for moving an orientation of the imaging means in a pan direction, the pan driving means functioning as the drive means; and
a tilt driving means for moving the orientation of the imaging means in a tilt direction, the tilt driving means functioning as the drive means,
wherein the threshold is set to each of the pan driving means and the tilt driving means, and
wherein the control means controls the pan driving means and the tilt driving means separately.

5. The imaging apparatus according to claim 1 or 2, wherein the drive means includes a stepping motor.

6. An imaging apparatus (100) comprising:
an imaging means (1);
a drive means (2, 3) for rotating the imaging means; and
a control means (16) for controlling a current value to be applied to the drive means based on a preliminarily set of characteristics that represent a relationship between a rotation speed and a current value to be applied to the drive means,
wherein the characteristics represent a relationship in which a current value to be applied to the drive means in a low-speed range of the rotation speed is greater than a current value to be applied to the drive means in a high-speed range of the rotation speed.

7. The imaging apparatus according to claim 6, wherein the characteristics represent a relationship among a rotation speed, an imaging angle of view, and a current value to be applied to the drive means.

8. An imaging apparatus (100) comprising:
an imaging means (1);
a drive means (2, 3) for changing an imaging direction of the imaging means;
a current value switching (16) means for changing a current value to be applied to the drive means based on a first speed, which is a speed for changing the imaging direction of the imaging means; and
a control switching means (16) for changing a control operation other than an operation of changing the current value based on a second speed, which is a speed for changing the imaging direction of the imaging means and is different from the first speed.

9. The imaging apparatus according to claim 8, wherein the control switching means is configured to switch between a constant voltage control operation and a constant current control operation.

10. The imaging apparatus according to claim 8, wherein the control switching means is configured to switch between a step control operation and a vector control operation.

11. The imaging apparatus according to claim 8, wherein the control switching means is configured to switch a division number of a step control operation.

12. The imaging apparatus according to any one of claims 8 to 11, wherein a switching prohibition time is set after at least one of switching by the current value switching means and switching by the control switching means.

13. The imaging apparatus according to any one of claims 8 to 11,
wherein a priority is set to each of the current value switching means and the control switching means, and
wherein switching operations are performed in descending order of priority in a case where the first speed and the second speed are exceeded simultaneously.

14. The imaging apparatus according to any one of claims 8 to 11, further comprising:
a first device configured to switch the current value; and
a second device configured to switch the control operation,
wherein a priority is set to each of the first device and the second device, and
wherein in a case where the device with higher priority has not performed a switching operation, the device with lower priority is configured to perform a switching determination operation.

15. A control method for an imaging means (1) comprising:
driving the imaging means by a drive means (2, 3); and
controlling a first current value to be applied to the drive means in a case where a rotation speed is less than or equal to a threshold, and controlling a second current value smaller than the first current value to be applied to the drive means in a case where the rotation speed is greater than the threshold,
wherein the threshold is a rotation speed preliminarily set based on the presence or absence of speed unevenness.

16. A control method for an imaging means (1) comprising:
driving the imaging means by a drive means (2, 3); and
controlling a current value to be applied to the drive means based on preliminarily set characteristics that represent a relationship between a rotation speed and a current value to be applied to the drive means,
wherein the characteristics represent a relationship in which a current value to be applied to the drive means in a low-speed range of the rotation speed is greater than a current value to be applied to the drive means in a high-speed range of the rotation speed.

17. A control method for an imaging means (1) comprising:
driving the imaging means by a drive means (2, 3);
changing a current value to be applied to the drive means based on a first speed, which is a speed for changing an imaging direction of the imaging means; and
changing a control operation other than an operation of changing the current value based on a second speed, which is a speed for changing the imaging direction of the imaging means and is different from the first speed.

18. A computer-readable non-transitory recording medium for storing a program for causing a computer to execute a control method according to any one of claims 15, 16 and 17.

19. A computer program for causing a computer to execute a control method according to any one of claims 15, 16, and 17.
